# EUROPEAN PATENT APPLICATION

(11) **EP 4 701 016 A1**
(43) Date of publication of application: **25.02.2026**
(21) Application number: 25191551.8
(22) Date of filing: 24.07.2025
(51) Int. Cl.: H02H 3/08, H02H 7/08, H02H 7/122, H02H 3/02, B64D 27/00

(54) **ELECTRICAL POWER SYSTEM AND METHOD OF CONTROL**

(30) Priority: 05.08.2024 GB 202411493
(71) Applicant: Rolls-Royce plc, London N1 9FX (GB)
(72) Inventor: Mehta, Keval, Derby DE24 8BJ (GB); Sweet, Mark R, Derby DE24 8BJ (GB); Trainer, David R, Derby DE24 8BJ (GB); Slater, Robert, Derby DE24 8BJ (GB); Joseph, Joselin Mary, Derby DE24 8BJ (GB)
(74) Representative: Rolls-Royce plc

(57) **Abstract**

There is provided a method of operating an electrical power system 200 for an aircraft 10. The electrical power system comprises a semiconductor-based active power converter 207, 206, 205 and a contactor 287, 287', 286, 285 coupled to and controllable by the semiconductor-based active power converter 207, 206, 205. The method comprises, in response to a determination 310 that there is a fault within the electrical power system 200, operating in a fault mode 320 which includes: maintaining the semiconductor-based active power converter 207, 206, 205 in a blocked configuration (optionally followed by maintaining the semiconductor-based active power converter 205 in a crow-bar configuration); and subsequently causing the contactor 287, 287', 286, 285 to be opened.

## Description

### CROSS REFERENCE TO RELATED APPLICATIONS

This represents the first application directed towards the subject-matter.

### FIELD

This invention relates to methods of operating (e.g., protectively operating) an electrical power system for an aircraft. This invention further relates to an electrical power system comprising a controller configured to carry out such methods.

### BACKGROUND

It is desirable to provide "more electric aircraft" (MEA) implementations which include electrical power systems configured to operate at relatively high voltages (e.g., relatively high DC voltages) and/or high currents. Such electrical power systems may include distribution networks which are configured to convey electrical energy from electrical sources (e.g., power generation systems) and electrical loads (e.g., propulsion machines and/or non-propulsive loads). In electrical power systems which utilise permanent magnet machines and/or electrical storage devices as electrical sources, being able to protect components of the electrical power system from the flow of electrical current associated with the development of faults within the electrical power system in a manner which is fast enough presents a challenge. The distribution network itself may also comprise capacitive elements (e.g., capacitors) that contribute towards large and near-instantaneous flows of electrical current when faults develop within the electrical system, further contributing to the challenge.

The present invention has been devised with the foregoing in mind.

### SUMMARY

According to a first aspect there is provided a method of operating an electrical power system for an aircraft, the electrical power system comprising: a semiconductor-based active power converter; and a contactor coupled to and controllable by the semiconductor-based active power converter; an electrical device and a DC bus; and the semiconductor-based active power converter is coupled between the DC bus and the electrical device via the contactor; the method comprising: in response to a determination that there is a fault within the electrical power system, operating in a fault mode which includes: maintaining the semiconductor-based active power converter in a blocked configuration; and subsequently causing the contactor to be opened.

In an embodiment, contactor is a mechanical contactor.

In an embodiment, the power converter contains input terminals and output terminals, and when the power converter is maintained in the blocked configuration, current flow through the input terminals and/or the output terminals of the power converter is restricted (e.g., substantially prevented). In an embodiment, the semiconductor-based active power converter comprises at least two half-bridges, each half-bridge comprising a high-side semiconductor switch and a low-side semiconductor switch. In an embodiment, the high-side semiconductor switches and/or the low-side semiconductor switches are MOSFETs.

In an embodiment, operating in the fault mode includes: monitoring a magnitude of an electrical current through a conduction pathway which includes the contactor; and causing the contactor to be opened when the monitored magnitude is lower than a threshold value.

In an embodiment, operating in the fault mode includes: subsequent to maintaining the converter in the blocked configuration and prior to causing the contactor to be opened, maintaining the converter in a crow-bar configuration.

In an embodiment, the power converter contains output terminals, and when the power converter is maintained in the crow-bar configuration, current flow through the output terminals of the power converter is contained within the power converter.

In an embodiment: the electrical device is an AC electrical machine; and the semiconductor-based active power converter is coupled to the DC bus via the contactor.

In an embodiment, the AC electrical machine is a motor, a generator or a motor-generator.

In an embodiment, the electrical device includes an energy storage device.

In an embodiment, the electrical system further comprises a fuse coupled between the semiconductor-based active power converter and the energy storage device.

In an embodiment: the semiconductor-based active power converter is one of a plurality of semiconductor-based active power converters of the electrical power system; the contactor is one of a plurality of contactors of the electrical power system, each contactor being coupled to and controllable by a respective one of the semiconductor-based active power converters; and operating in the fault mode includes: maintaining at least one of the semiconductor-based active power converters in the blocked configuration; and subsequently causing the contactor coupled to the at least one semiconductor-based active power converter to be opened.

In an embodiment, operating in the fault mode includes: subsequent to maintaining the at least one semiconductor-based active power converter in the blocked configuration and prior to causing the contactor coupled to the at least one semiconductor-based active power converter to be opened, maintaining the at least one semiconductor-based active power converter in a crow-bar configuration. According to a second aspect there is provided an electrical power system comprising: a semiconductor-based active power converter; a contactor coupled to and controllable by the semiconductor-based active power converter; and a controller configured to carry out a method in accordance with the first aspect.

In an embodiment, the semiconductor-based active power converter comprises the controller.

In an embodiment, the semiconductor-based active power converter is one of a plurality of semiconductor-based active power converters of the electrical power system, the contactor is one of a plurality of contactors of the electrical power system, each contactor being coupled to and controllable by a respective one of the semiconductor-based active power converters, and the controller is one of a plurality of controllers, wherein each semiconductor-based active power converter comprises a respective one of the plurality of controllers, and wherein each controller is configured to carry out a method in accordance with the first aspect.

According to a third aspect, there is provided an aircraft comprising an electrical power system in accordance with the second aspect.

According to a fourth aspect, there is provided a computer program comprising instructions to cause the controller of an electrical power system in accordance with the seconds aspect to carry out a method in accordance with the first aspect.

According to a fifth aspect there is provided a computer-readable medium having stored thereon a computer program in accordance with the fourth aspect.

### BRIEF DESCRIPTION OF THE DRAWINGS

Embodiments will now be described by way of example only with reference to the accompanying drawings, in which:
FIG. 1 is a simplified top view of an aircraft comprising an airframe and a propulsion machine;
FIG. 2 shows a general arrangement of a turbofan engine for an aircraft;
FIG. 3 is a schematic diagram of an example electrical power system suitable for use with the aircraft of FIG. 1;
FIG. 4 illustrates an electrically powered propulsion machine for an aircraft;
FIG. 5 is a circuit diagram which shows an example semiconductor-based active DC-DC converter suitable for use with the electrical power system of FIG. 3;
FIG. 6 is a circuit diagram which shows an example semiconductor-based active DC-AC converter suitable for use with the electrical power system of FIG. 3;
FIG. 7 is a circuit diagram which shows an example semiconductor-based active AC-DC converter suitable for use with the electrical power system of FIG. 3;
FIG. 8 is a flowchart which shows an example method of operating an electrical power system; and
FIG. 9 shows an example machine-readable medium/data carrier.

### DETAILED DESCRIPTION

### Aircraft

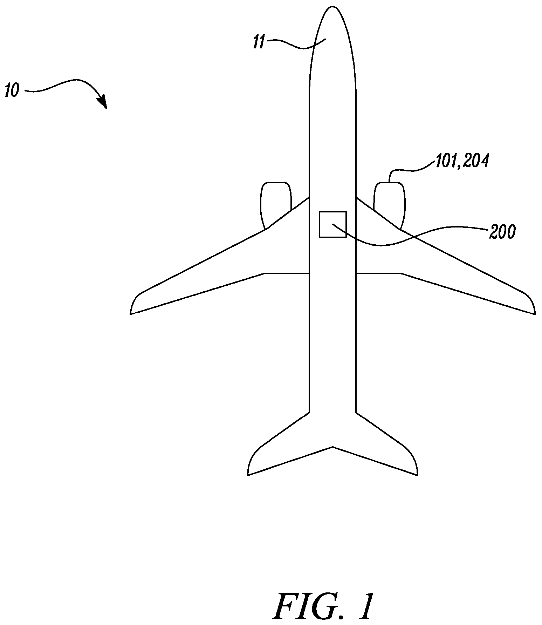

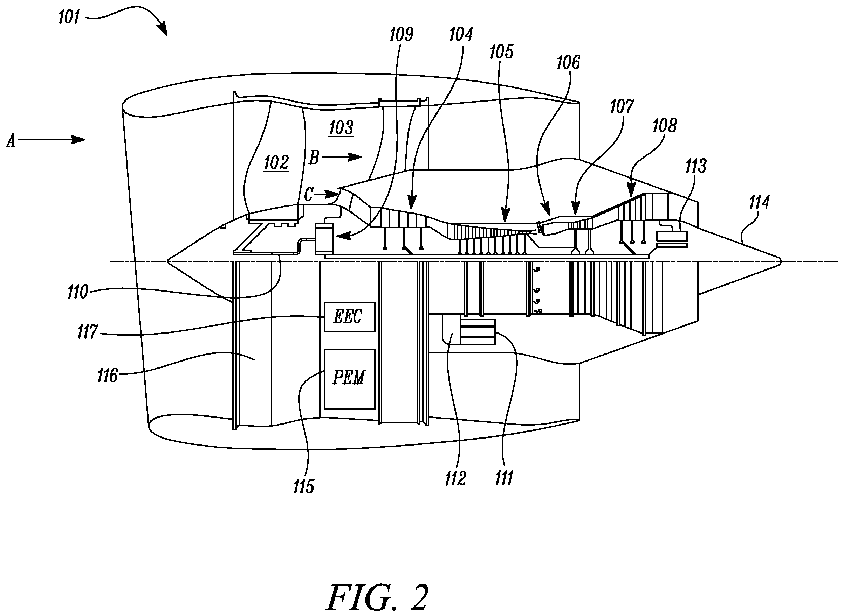

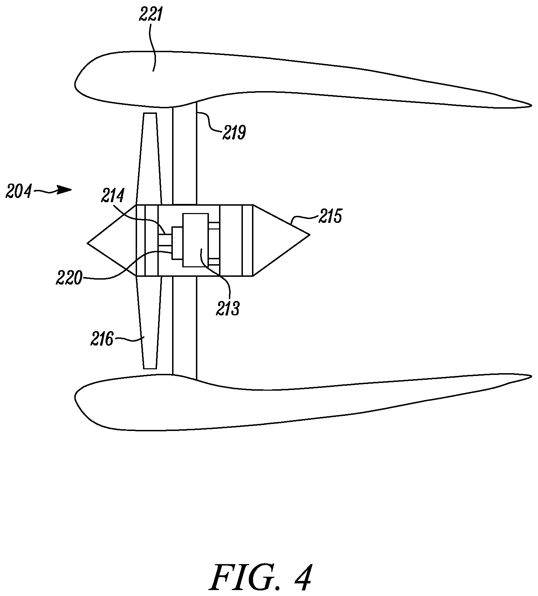

FIG. 1 shows a simplified and schematic view of an aircraft 10 comprising an airframe 11 and a propulsion machine 101, 204. The propulsion machine 10 may be a gas turbine engine 101 in accordance with the gas turbine engine 101 described below with reference to FIG. 2 or a motor-driven propulsion machine 204 in accordance with the motor-driven propulsion machine 204 described below with reference to FIG. 4. The aircraft also comprises an electrical power system 200.

### Gas turbine engine

A general arrangement of a gas turbine engine 101 (which is an example of a propulsion machine) for an aircraft, such as the aircraft 200 of FIG. 1, is shown in FIG 2. The engine 101 is of turbofan configuration, and thus comprises a ducted fan 102 that receives intake air A and generates two pressurised airflows: a bypass flow B which passes axially through a bypass duct 103 and a core flow C which enters a core gas turbine.

The core gas turbine comprises, in axial flow series, a low-pressure compressor 104, a high-pressure compressor 105, a combustor 106, a high-pressure turbine 107, and a low-pressure turbine 108.

In operation, the core flow C is compressed by the low-pressure compressor 104 and is then directed into the high-pressure compressor 105 where further compression takes place. The compressed air exhausted from the high-pressure compressor 105 is directed into the combustor 106 where it is mixed with fuel and the mixture is combusted. The resultant hot combustion products then expand through, and thereby drive, the high-pressure turbine 107 and in turn the low-pressure turbine 108 before being exhausted to provide a small proportion of the overall thrust.

The high-pressure turbine 107 drives the high-pressure compressor 105 via an interconnecting shaft. The low-pressure turbine 108 drives the low-pressure compressor 104 via another interconnecting shaft. Together, the high-pressure compressor 105, high-pressure turbine 107, and associated interconnecting shaft form part of a high-pressure spool of the engine 101. Similarly, the low-pressure compressor 104, low-pressure turbine 108, and associated interconnecting shaft form part of a low-pressure spool of the engine 101. Such nomenclature will be familiar to those skilled in the art. Those skilled in the art will also appreciate that whilst the illustrated engine has two spools, other gas turbine engines have a different number of spools, e.g., three spools.

The fan 102 is driven by the low-pressure turbine 108 via a reduction gearbox in the form of a planetary-configuration epicyclic gearbox 109. Thus in this configuration, the low-pressure turbine 108 is connected with a sun gear of the gearbox 109. The sun gear is meshed with a plurality of planet gears located in a rotating carrier, which planet gears are in turn meshed with a static ring gear. The rotating carrier drives the fan 102 via a fan shaft 110. It will be appreciated that in alternative embodiments a star-configuration epicyclic gearbox (in which the planet carrier is static and the ring gear rotates and provides the output) may be used instead, and indeed that the gearbox 109 may be omitted entirely so that the fan 102 is driven directly by the low-pressure turbine 108.

It is increasingly desirable to facilitate a greater degree of electrical functionality on the airframe and on the engine. To this end, the engine 101 of FIG. 2 comprises one or more rotary electrical machines, generally capable of operating both as a motor and as a generator. The number and arrangement of the rotary electrical machines will depend to some extent on the desired functionality. Some embodiments of the engine 101 include a single rotary electrical machine 111 driven by the high-pressure spool, for example by a core-mounted accessory drive 112 of conventional configuration. Such a configuration facilitates the generation of electrical power for the engine and the aircraft and the driving of the high-pressure spool to facilitate starting of the engine in place of an air turbine starter. Other embodiments, including the one shown in FIG. 2, comprise both a first rotary electrical machine 111 coupled with the high pressure spool and a second rotary electrical machine 113 coupled with the low pressure spool. In addition to generating electrical power and the starting the engine 101, having both first and second rotary machines 111, 113, connected by power electronics, can facilitate the transfer of mechanical power between the high and lower pressure spools to improve operability, fuel consumption etc.

As mentioned above, in FIG. 2 the first rotary electrical machine 111 is driven by the high-pressure spool by a core-mounted accessory drive 112 of conventional configuration. In alternative embodiments, the first electrical machine 111 may be mounted coaxially with the turbomachinery in the engine 101. For example, the first electrical machine 111 may be mounted axially in line with the duct between the low- and high- pressure compressors 104 and 105. In FIG. 2, the second electrical machine 113 is mounted in the tail cone 114 of the engine 101 coaxially with the turbomachinery and is coupled to the low-pressure turbine 108. In alternative embodiments, the second rotary electrical machine 113 may be located axially in line with low-pressure compressor 104, which may adopt a bladed disc or bladed drum configuration to provide space for the second rotary electrical machine 113. It will of course be appreciated by those skilled in the art that any other suitable location for the first and (if present) second electrical machines may be adopted.

The first and second electrical machines 111, 113 are connected with power electronics. Extraction of power from or application of power to the electrical machines is performed by a power electronics module (PEM) 115. In the present embodiment, the PEM 115 is mounted on the fan case 116 of the engine 101, but it will be appreciated that it may be mounted elsewhere such as on the core of the gas turbine, or in the vehicle to which the engine 101 is attached, for example.

Control of the PEM 115 and of the first and second electrical machines 111 and 113 is in the present example performed by an engine electronic controller (EEC) 117. In the present embodiment the EEC 117 is a full-authority digital engine controller (FADEC), the configuration of which will be known and understood by those skilled in the art. It therefore controls all aspects of the engine 101, i.e. both of the core gas turbine and the first and second electrical machines 111 and 113. In this way, the EEC 117 may holistically respond to both thrust demand and electrical power demand.

The one or more rotary electrical machines 111, 113 and the power electronics 115 may be configured to output to or receive electric power from one, two or more DC busses. The DC busses allow for the distribution of electrical power to other engine electrical loads and to electrical loads on the airframe.

Those skilled in the art will appreciate that the gas turbine engine 101 described above may be regarded as a 'more electric' gas turbine engine because of the increased role of the electrical machines 111, 113 compared with those of conventional gas turbines.

### Electrical power system and associated propulsion machine

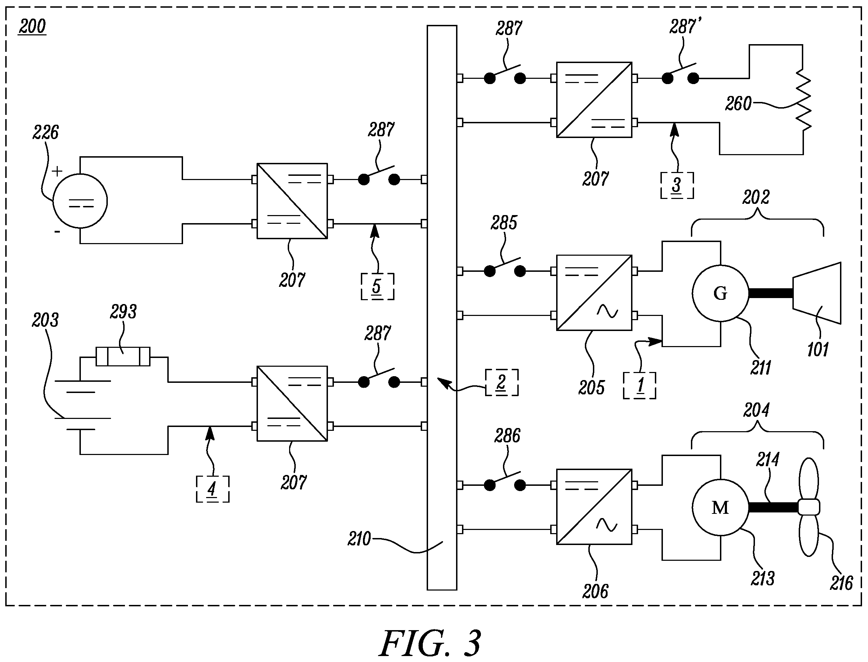

FIG. 3 illustrates an example electrical power system 200 of an electrified aircraft (e.g., a hybrid electric aircraft or a fully electric aircraft), such as the aircraft 10 of FIG. 1. The electrical power system 200 includes a generator set 202 comprising an engine 101 and electrical generator 211, DC power supply 226 and a battery pack 203. Each of the generator set 202, the DC power supply 226 and the battery pack 203 are used as electrical sources to power a plurality of electrical loads. The DC power supply 226 may be, for example, a fuel cell system (e.g., a type of energy storage device) or a ground power supply which is available when an external cable is coupled to the aircraft. The plurality of electrical loads include a non-propulsive load 260 and a motor-driven propulsion machine 204 comprising a fan 216 and an electrical motor 213. The non-propulsive load 260 may be, for example, a heater. The electrical sources (i.e., the generator 211, the battery pack 203 when discharging and the DC power supply 226) and the electrical loads (i.e., the motor 213, the battery pack 203 when charging and the non-propulsive load 260) are each examples of electrical devices of the electrical power system 200. The electrical power system further comprises a fuse 293 and a plurality of mechanical contactors 285, 286, 287, 287'.

An example of the motor-driven propulsive machine 204 is shown in detail by FIG. 4. In this example the propulsion machine 204 takes the form of a ducted fan arrangement. The fan 216 is enclosed within a fan duct 219 defined within a nacelle 221, and is mounted to a core nacelle 215. The fan 216 is driven by the motor 213 via a drive shaft 214, both of which may also be thought of as components of the propulsion machine 204. In this embodiment, a gearbox 220 is provided between the motor 213 and the drive shaft 214 (see FIG. 4).

Referring back to FIG. 3, the example electrical power system 200 further comprises an AC-DC converter 205, a DC bus 210, a DC-AC converter 206 and a plurality of DC-DC converters 207. It will be appreciated that whilst one generator set 202 and one propulsion machine 204 are illustrated in this example, a electrical power system 200 may include one or more generator sets 202 and/or one or more propulsion machines 204.

The generator 211 is coupled to the DC bus 210 via the AC-DC converter 205. That is, the AC-DC converter 205 is coupled between the generator 211 and the DC bus 210. A shaft or spool 214 of the engine 101 is coupled to and drives the rotation of a shaft of the generator 211 which thereby produces alternating current. The AC-DC converter 205 converts the alternating current into direct current which is fed to various electrical loads via the DC bus 210. These electrical loads include non-propulsive loads (e.g., the resistive heater 260) and the motor 213 which drives the propulsion machine 204 via the DC-AC converter 206. In this way, the generator 211 serves as an electrical source.

The motor 213 is coupled to the DC bus 210 via the DC-AC converter 206. That is, the DC-AC converter 206 is coupled between the motor 213 and the DC bus 210. The motor 213 is supplied with electric power from the DC bus 210 via the DC-AC converter 2016, for example as supplied by the generator set 202, the battery pack 203 and/or the DC power supply 226. As a result, the motor 213 functions as an electrical load. The motor 213 of the propulsion machine, and indeed the electrical machine 211 of the generator set 202, may be of any suitable type, for example of the permanent magnet synchronous type.

The battery pack 203, which may be made up of a number of battery modules connected in series and/or parallel, is connected to the DC bus 210 via the fuse 293 and a first of the DC-DC converters 207. That is, the first DC-DC converter 207 is coupled between the battery pack 203 and the DC bus 210. The first DC-DC converter 207 functions to convert between a voltage of the battery pack 203 and an operating voltage of the DC bus 210. In this way, the battery pack 203 can replace or supplement the power provided by the generator set 202 (by discharging and thereby feeding the DC bus 210) or can be charged using the power provided by the generator set 202 (by being fed by the DC bus 210). Accordingly, the battery pack 203 may function as either an electrical source or an electrical load depending on whether it is being discharged or charged. The battery pack 203 is an example of an energy storage device.

The DC power supply 226 is connected to the DC bus 210 via a second of the DC-DC converters 207. That is, the second DC-DC converter 207 is coupled between the DC power supply 226 and the DC bus 210. The second DC-DC converter 207 functions to convert between a voltage of the DC power supply 226 and the operating voltage of the DC bus 210. In this way, the DC power supply 226 can replace or supplement the power provided by the generator set 202 and/or the battery pack 203. Consequently, the DC power supply 226 may function as an electrical source.

The non-propulsive load 260 is connected to the DC bus 210 via a third of the DC-DC converters 207. That is, the third DC-DC converter 207 is coupled between the non-propulsive load 260 and the DC bus 210. The third DC-DC converter 207 functions to convert between an operating voltage of the DC bus 210 and an operating voltage of the non-inductive load 260. In this way, the non-inductive load can consume the power provided by the generator set 202, the battery pack 203 and/or the DC power supply 226.

Each DC-DC converter 207 is generally configured to convert an input DC voltage supplied to an input side of the DC-DC converter 207 at a first magnitude to an output DC voltage at a second magnitude for supply from an output side of the DC-DC converter 207. A ratio between the first magnitude and the second magnitude may be referred to as a conversion ratio of each DC-DC converter 207. The conversion ratio of the DC-DC converter 207 is controllable, as will be understood by those skilled in the art. If the conversion ratio of the DC-DC converter 207 is greater than unity, the DC-DC converter 207 performs a boost (or a step-up) function in use. On the other hand, if the conversion ratio of the DC-DC converter is less than unity, the DC-DC converter 207 performs a buck (or a step-down) function in use. Depending on whether the DC-DC converter 207 couples a device which is either an electrical source or an electrical load (or a device which is capable of selectively functioning as either an electrical source or an electrical load, such as the battery pack 203) to the DC bus 210, the bus side and the device side of the DC-DC converter 207 may function as either the input side or the output side thereof.

Each DC-DC converter 207 is coupled to the DC bus 210 via a respective bus side contactor 287. The third DC-DC converter 207 is coupled to the non-propulsive load 260 via a device side contactor 287'. This disclosure envisages that the other DC-DC converters 207 may also be coupled to the corresponding electrical devices (i.e., to the battery pack 203 or the DC power supply 226 as appropriate) by respective device side contactors (not shown).

The motor 213 is a single-phase AC electric motor 213 and the DC-AC converter 206 is a single-phase DC-AC converter 206 (e.g., a single phase inverter 206). The motor 213 may be, for example, an induction motor (i.e., an asynchronous motor). To this end, the motor 213 may include a main winding, an auxiliary winding, a start capacitor and/or a run capacitor, as will be appreciated by those skilled in the art. Otherwise, the motor 213 may be, for example, a permanent magnet synchronous motor.

The DC-AC converter 206 is generally configured to convert the input DC voltage supplied to the bus side of the DC-AC converter 206 to an output AC voltage for supply to the motor 213 from the device side of the DC-AC converter 206. A frequency of the output AC voltage for supply to the motor 213 is controllable. The DC-AC converter 206 is coupled to the DC bus 210 via a bus side contactor 286. This disclosure anticipates that the DC-AC converter 206 may also be coupled to the motor 213 via a device side contactor.

The generator 211 is a multiple-phase AC generator and the AC-DC converter 205 is a multiple-phase AC-DC converter 205 (e.g., a multiple-phase active rectifier 205). The generator 211 may include a plurality of phase windings, as will be appreciated by those skilled in the art. In this example, the generator 211 is a three-phase AC generator 211.

The multiple-phase AC-DC converter 205 is generally configured to convert a plurality of output AC voltages supplied to the device side of the multiple-phase rectifier 205 by the generator 211 to an output DC voltage for supply to the DC bus 210 from the bus side of the multiple-phase AC-DC converter 205. A frequency and a phase of each input AC voltage generated by the generator 211 for supply to the multiple-phase rectifier 205 is/are variable, and the multiple-phase rectifier 205 is controllable to facilitate such variations. The AC-DC converter 206 is coupled to the DC bus 210 via a bus side contactor 286. This disclosure anticipates that the DC-AC converter 206 may also be coupled to the motor 213 via a device side contactor (not shown).

The generator 211 and the motor 213 are both examples of AC electrical machines. In particular, it may be that the generator 211 and the motor 213 are each capable of producing alternating current and driving a mechanical load (e.g., the fan 216 or the engine 101) so as to act as electrical sources, however in use only the generator 211 is expected to produce alternating current and only the motor 213 is expected to drive a mechanical load (e.g.,. the fan 216) under normal conditions. If so, the generator 211 and the motor 213 may each be referred to as motor-generators 211, 213. Nevertheless, under some operating conditions, it may be that the generator 211 drives a mechanical load (e.g., the engine 101) and the motor 213 produces alternating current. The AC-DC converter 205 and the DC-AC converter 206 may be configured to operate bidirectionally to accommodate this. Namely, in some examples, the AC-DC converter 205 may be configured to operate in reverse as a DC-AC converter and the DC-AC converter 206 may be configured to operate in reverse as an AC-DC converter.

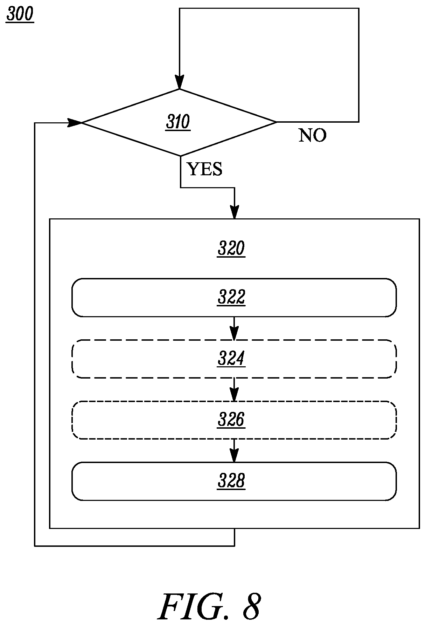

The DC bus 210 and the electrical coupling(s) between the respective electrical devices (e.g., the generator 211, the battery pack 203, the DC power supply 226, the motor 213, and the non-propulsive load 260) together form a DC distribution network/channel. This disclosure envisages that the electrical power system 200 may comprise one or more additional DC busses and electrical coupling(s) between the respective electrical devices, each of which together form one or more additional redundant DC distribution networks/channels. If so, use each of the electrical devices may be possible despite the loss of one of the DC distribution networks/channels due to the presence of a fault therein (as discussed in further detail below with respect to FIG. 8). The operating voltage of the DC bus 210 may be relatively high, such that the DC bus 210 may be referred to as a high-voltage DC bus 210. For example, the operating voltage of the DC bus may be around 540 V.

As will be described in further detail below, the AC-DC converter 205, the DC-AC converter 206 and the DC-DC converters 207 are each examples of semiconductor-based active power converters.

### Semiconductor-based active power converters

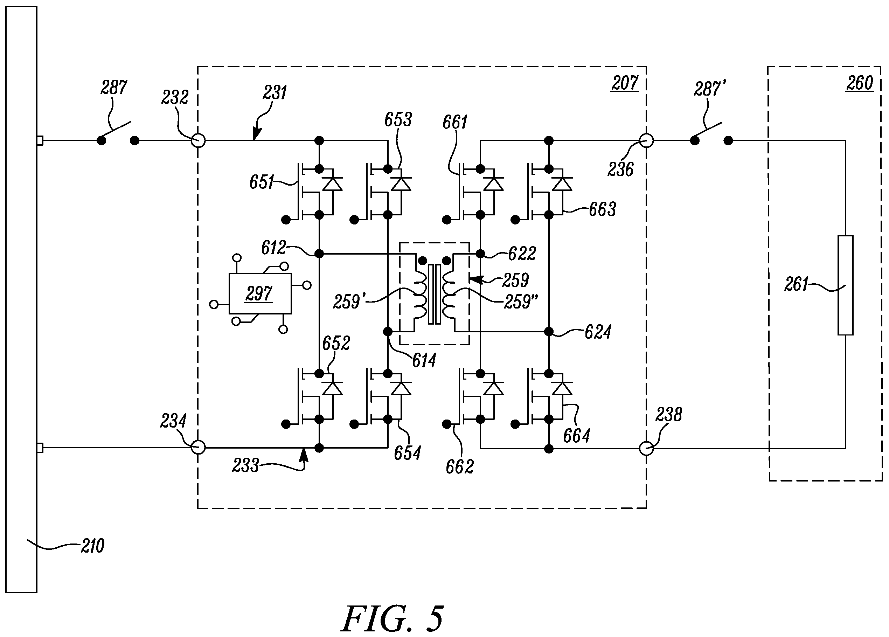

FIG. 5 is a circuit diagram showing the third DC-DC converter 207 and the non-propulsive load 260 in more detail. The DC-DC converter 207 is an isolated DC-DC converter 207 which includes a transformer 259 having a bus side coil 259' and a device side coil 259". In this way, the bus side of the DC-DC converter 207 is galvanically isolated from the device side of the DC-DC converter 207, but the bus side of the DC-DC converter 207 is electromagnetically coupled to the device side of the DC-DC converter 207 by the transformer 259.

The bus side of the DC-DC converter 207 is configured to receive the input DC voltage from the DC bus 210 through first and second bus terminals 232, 234. The device side of the DC-DC converter is configured to supply the output DC voltage to the non-inductive load 260 through first and second device terminals 236, 238. The non-inductive load 260 is shown in FIG. 5 as comprising a winding 261, which may include any suitable combination of a resistive load, an inductive load and a capacitive load. The winding 261 may be more generally referred to as a load 261.

The bus side of the DC-DC converter 207 comprises a plurality of bus side semiconductor switches and the bus side coil 259' of the transformer 259. The plurality of bus side (semiconductor) switches are arranged, in this example, as first and second bus side half-bridges. The first bus side half-bridge comprises a first high-side switch 651 and a first low-side switch 652, while the second bus side half-bridge comprises a second high-side switch 653 and a second low-side switch 654. Therefore, the bus side of the DC-DC converter 207 comprises a plurality of high-side switches 651, 653 and a plurality of low-side switches 652, 654. It will be appreciated that "high-side" and "low-side" are terms of the art. A first terminal of the bus side coil 259' is coupled to a first bus side half-bridge node 612 between the first high-side switch 651 and the first low-side switch 652 of the first bus side half-bridge. A second terminal of the bus side coil 259' is coupled to a second bus side half-bridge node 614 between the second high-side switch 653 and the second low-side switch 654 of the second bus side half-bridge.

The device side of the DC-DC converter 207 comprises a plurality of device side semiconductor switches and the device side coil 259" of the transformer 259. The plurality of device side (semiconductor) switches are arranged, in this example, as first and second device side half-bridges. The first device side half-bridge comprises a first high-side switch 661 and a first low-side switch 662, while the second device side half-bridge comprises a second high-side switch 663 and a second low-side switch 666. A first terminal of the device side coil 259" is coupled to a first device side half-bridge node 622 between the first high-side switch 661 and the first low-side switch 662 of the first device-side half-bridge. A second terminal of the device-side coil 259" is coupled to a second device side half-bridge node 624 between the second high-side switch 663 and the second low-side switch 664 of the second device side half-bridge.

As will be recognisable to those skilled in the art, the plurality of bus side switches and the bus side coil 259' of the transformer 259 are mutually connected to each other in a typical dual active bridge power converter arrangement. As will also be recognisable to those skilled in the art, the plurality of device side switches and the output coil 259" of the transformer 259 are mutually connected to each other in a typical dual active bridge converter arrangement.

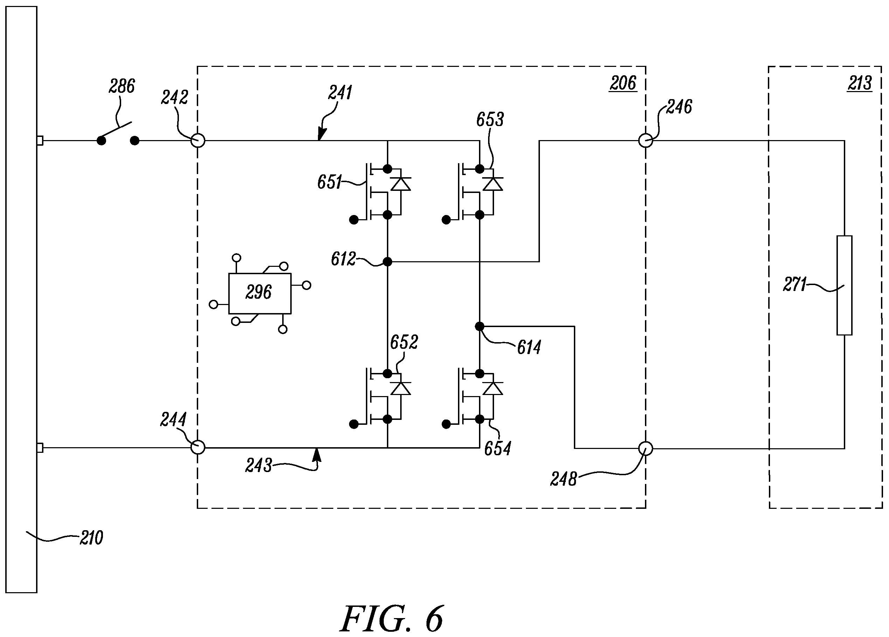

FIG. 6 is a circuit diagram showing the DC-AC converter 206 and the motor 213 in more detail. The DC-AC converter 206 shares some common features with the DC-DC converter 207 described above with reference to FIG. 5, with those common features being denoted using like reference signs.

However, in contrast to the DC-DC converter 207, the DC-AC converter 206 comprises an H-bridge inverter circuit. The DC-AC converter 206 therefore does not comprise a transformer or a plurality of output switches. The plurality of bus side switches 651, 652, 653, 654 are arranged as a first half-bridge (comprising a first high-side switch 651 and a first low-side switch 652) and a second half-bridge (comprising a second high-side switch 652 and a second low-side switch 654) which together form a single-phase H-bridge inverter circuit, as will be recognisable to those skilled in the art.

The bus side of the single-phase AC-DC converter 206 is configured to receive the input DC voltage from the DC power supply 220 via the DC bus 210 through first and second bus terminals 242, 244. The device side of the single-phase AC-DC converter 206 is configured to provide the output AC voltage to the motor 213 through first and second device terminals 246, 248. The motor 213 is shown by FIG. 6 as comprising a winding 271, which may include any suitable combination of a resistive load, an inductive load and a capacitive load. A first device side half-bridge node 612 is connected to a first terminal of the motor winding 271 and a second device side half-bridge node 614 is connected to a second terminal of the motor winding 271. The winding 271 may be more generally referred to as a load 271.

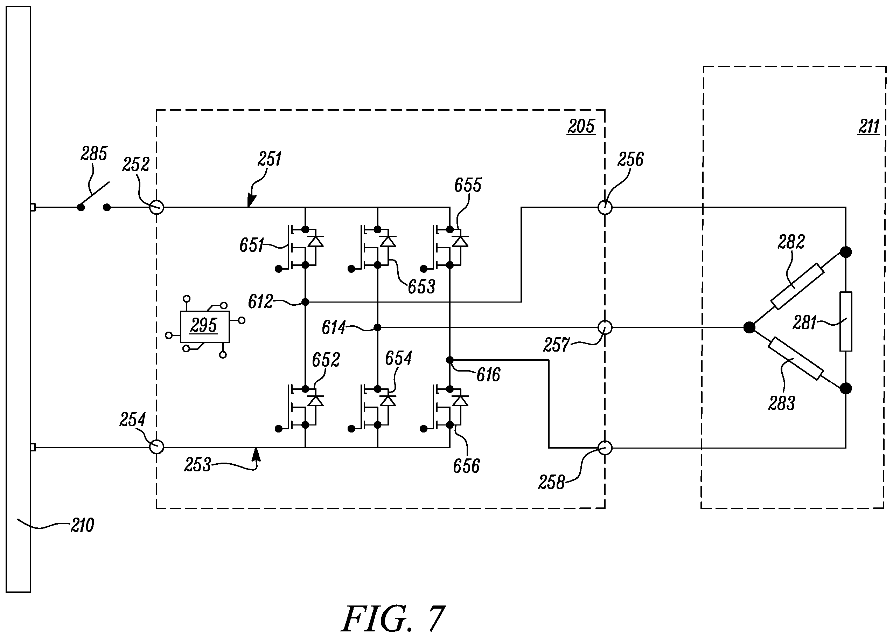

FIG. 7 is a circuit diagram showing the AC-DC converter 205 and the generator 211 in more detail. The AC-DC converter 205 shares many common features with the DC-AC converter 206 described above with reference to FIG. 6, with those common features being denoted using like reference signs.

In contrast to the DC-AC converter 206, the AC-DC converter 205 is a three-phase converter 205. The AC-DC converter 205 therefore comprises first, second and third half-bridges, each comprising a respective high-side switch 651, 653, 655 and a respective low-side switch 652, 654, 656. The first, second and third half-bridges are arranged so as to form a three-phase H-bridge inverter circuit, as will be recognisable to those skilled in the art.

The device side of the three-phase AC-DC converter 205 is configured to receive the input AC voltages from the generator 211 through first, second and third device terminals 256, 257, 258. The generator 211 is shown by FIG. 7 as comprising first, second and third windings 281, 282, 283, each of which may include any suitable combination of a resistive load, an inductive load and a capacitive load. In the specific example of FIG. 7, the first, second and third windings 281, 282, 283 are arranged in a delta configuration, but this is purely for illustrative purposes. For instance, the first, second and third windings 281, 282, 283 may be arranged in a wye configuration. A first device side half-bridge node 612 is coupled to and between a terminal of the first motor winding 281 and a terminal of the second motor winding 282, a second device side half bridge node 614 is connected to and between a terminal of the second motor winding 282 and a terminal of the third motor winding 283, and a third device side half bridge node 616 is connected to and between a terminal of the third motor winding 283 and a terminal of the first motor winding 281. The bus side of the three-phase AC-DC converter 205 is configured to apply the output DC voltage to the DC bus 210 through first and second bus terminals 252, 254.

In each of the examples of FIGs. 5-8, a first bus connection rail 231, 241, 251 extends between the first bus terminal 232, 242, 252 and the first high-side switch 651 to provide an electrical connection between the first bus terminal 232, 242, 252 and the plurality of high-side switches 651, 653, 655. Similarly, a second bus connection rail 233, 243, 253 extends between the second bus terminal 234, 244, 254 and the first low-side switch 652 to provide an electrical connection between the second bus terminal 234 and the plurality of low-side switches 652, 654, 656. In use, the first bus connection rail 231, 241, 251 is connected to a positive terminal of the DC bus 210 whereas the second bus connection rail 233, 243, 253 is connected to a reference voltage (e.g. ground or negative) terminal of the DC bus 210. As a result, an electric potential of the first bus connection rail 231, 241, 251 is higher than an electric potential of the second bus connection rail 233, 243, 253 during use. Therefore, the first bus connection rail 231, 241, 251 may be referred to as a positive bus connection rail 231, 241, 251 and the second bus connection rail 233, 243, 253 may be referred to as a negative bus connection rail 233, 243, 253. The first bus connection rail 231, 241, 251 and the second bus connection rail 233, 243, 253 together form a DC link of the converter 207, 206, 205.

Each of the converters 207, 206, 205 are referrable to as semiconductor-based active power converters 207, 206, 205 because the function of the each to convert power is dependent on the action(s) of the semiconductor switches 651-656 (and, in the case of the DC-DC converter 207, the semiconductor switches 661-664) and active control thereof. One or more (e.g., all) of the semiconductor switches 651-664 may be metal oxide semiconductor field effect transistors (MOSFETs). Depending on the direction of power flow through the converters 207, 206, 205, the bus terminals 232, 234, 242, 244, 252, 254 and the device terminals 236, 238, 246, 248, 256, 257, 258 are referrable to as input terminals and output terminals, respectively.

Each converter 207, 206, 205 is selectively operable in a blocked configuration. When the converter 207, 206, 205 is maintained in the blocked configuration, current is restricted from flowing through the terminals 232-238, 242-248, 252-258 when the converter 207, 206, 205 is maintained in the blocked configuration. In the example shown by FIG. 5, when in the blocked configuration, the high-side switch 651, 653 and the low-side switch 652, 654 (i.e., the low-side switch 652, 654 belonging to the same half-bridge) of one or more of the half-bridges of the bus side of the converter 207, 206, 205 and the high-side switch 661, 663 and the low-side switch 662, 664 (i.e., the low-side switch 662, 664 belonging to the same half-bridge) of one or more of the half-bridges of the device side of the converter 207, 206, 205 is in an off state (e.g., a substantially non-conducting state). In the example shown by FIG. 6, when in the blocked configuration, the high-side switch 651, 653 and the low-side switch 652, 654 (i.e., the low-side switch 652, 654 belonging to the same half-bridge) of one or more of the half-bridges of the converter 207, 206, 205 is in the off state (e.g., the substantially non-conducting state). In the example shown by FIG. 7, when in the blocked configuration, the high-side switch 651, 653, 655 and the low-side switch 652, 654, 656 (i.e., the low-side switch 652, 654, 565 belonging to the same half-bridge) of two or more of the half-bridges of the converter 207, 206, 205 is in the off state (e.g., the substantially non-conducting state).

At least the AC-DC converter 205 is also selectively operable in a crow-bar configuration. When the AC-DC converter 205 is maintained in the crow-bar configuration, a low-impedance path within the converter 205 is provided across the first device terminal 256,the second device terminal 257 and the third device terminal 258. Accordingly, current flowing through the device terminals 256, 257, 258 is contained within the converter when the converter 205 is maintained in the crow-bar configuration. In the examples shown by FIG. 7, when in the crow-bar configuration, each high-side switch 651, 653, 655 or the each low-side switch 652, 654, 656 of all of the half-bridges is in the on state (e.g., the substantially conducting state) such that a low-impedance path is provided between the device terminals 256, 257, 258 through the switches which are in the on state.

Each converter 207, 206, 205 is functionally provided with (e.g., comprises) a respective controller 297, 296, 295 configured to control operation of the converter (e.g., by controlling the semiconductor switches 651-656, 661-664 thereof). To this end, the controller 297, 296, 295 of each converter 207, 206, 205 is communicatively coupled with each of the plurality of bus side switches as well as each of the plurality of device side switches (if present). The controller 297, 296, 295 of each converter 207, 206, 205 is also configured to control the contactor(s) 287, 287', 286, 285 coupled thereto.

The controller 297, 296, 295 of each converter 207, 206, 205 is configured to monitor a voltage at and/or a current through the bus terminals 232, 234, 242, 244, 252, 254 and/or the device terminals 236, 238, 246, 248, 256, 257, 258 using appropriate transducers (e.g., voltage and/or current transducers) at or within the respective terminals.

### Method of operating an electrical power system

FIG. 8 is a flowchart which shows an example method 300 of operating an electrical power system in accordance with the electrical power system 200 described above with reference to FIG. 3. The steps of the method 300 are performed by the controller 297, 296, 295 of each converter 207, 206, 205 (e.g., as described above with reference to FIGs. 5 to 7), such that the controllers 297, 296, 295 (and the converters 207, 206, 205) cooperate to provide a decentralised control system for the electrical power system 200 when performing the method 300. At least some steps of the method 300 may be performed by a central controller of the electrical power system 200 (e.g., in addition to the steps of the method 300 being performed by the controller 297, 296, 295 of each converter 207, 206, 205 to provide an element of redundancy in case of failure of control functions by the converter(s) 207, 206, 205).

The method 300 includes an action of determining, at block 310, whether the presence of an electrical fault is detected within the electrical power system 200. The presence of an electrical fault within the electrical power system 200 may be determined to be detected by determining whether one or more signals received from the voltage and/or current transducers at or within the bus terminals 232, 234, 242, 244, 252, 254 and/or the device terminals 236, 238, 246, 248, 256, 257, 258 is indicative of the presence of an electrical fault (which is herein after referred to as a "fault signal"). For example, a signal from at least one of the current transducers at one or more of the terminals may indicate that an excessively large current (e.g., a fault current) is flowing through the terminal(s). Such an excessively large current is indicative of a short-circuit type fault having developed within the electrical power system 200.

If it is determined, at block 310, that a fault signal has been received (and thus the presence of an electrical fault has been detected), the method 300 includes entering (e.g., operating in), at block 320, a fault mode. On the other hand, if it is determined that a fault signal has not been so received at block 310, the method 300 includes repeating the action of determining, at block 310, whether the presence of an electrical fault is detected (e.g., after the action of determining, at block 330, whether a reset signal has been received as is described below). Accordingly, the method 300 may comprise repeatedly determining, at block 310, whether the presence of an electrical fault is detected until a positive determination that the presence of an electrical fault has been detected and the method 300 then includes entering, at block 320, the fault mode.

The fault mode, at block 320, includes sequentially executing the steps of:
(a) maintaining, at sub-block 322, the semiconductor-based power converter 207, 206, 205 in the blocked configuration; and
(b) maintaining, at sub-block 324, the semiconductor-based power converter 205 in the crow-bar configuration; and
(c) monitoring, at sub-block 326, a magnitude of an electrical current through a conduction pathway which includes the contactor 287, 287', 286, 285 coupled to the corresponding semiconductor-based power converter 207, 206, 205; and
(d) causing, at sub-block 328, the contactor 287, 287', 286, 285 coupled to the corresponding semiconductor-based power converter 207, 206, 205 to be opened (i.e., moved into the open state by commanding the contactor 287, 287', 286, 285 to open) so as to galvanically isolate the respective electrical device 203, 211, 213, 226, 260 from the DC bus 210.

It will be understood that steps (b) and/or (c) is/are not performed in some examples of the method 300 (i.e., steps (b) and (c) are optional). For example, the method 300 may only include sequentially executing steps (a), (b), and (d) or sequentially executing steps (a), (c) and (d). If the method includes step (c), step (d) may include only causing the contactor 287, 287', 286, 285 coupled to the corresponding semiconductor-based power converter 207, 206, 205 to be opened when the monitored magnitude is lower than a threshold value.

Monitoring, at sub-block 326, the magnitude of the electrical current through the conduction pathway including the contactor 287, 287', 286, 285 (e.g., the electrical coupling on which the contactor is disposed) is carried out based on one or more signals received from the current transducers at or within the bus terminals 232, 234, 242, 244, 252, 254 and/or the device terminals 236, 238, 246, 248, 256, 257, 258 as appropriate. Causing, at sub-block 328, the contactor 287, 287', 286, 285 coupled to the corresponding semiconductor-based power converter 207, 206, 205 to be opened when the monitored magnitude is lower than a threshold value may be subject to waiting for a predetermined time period (e.g., a confirmation time) to have elapsed and/or applying signal filtering to prevent the contactor 287, 287', 286, 285 from being erroneously opened (e.g., opened before the current through the contactor 287, 287', 286, 285 has reduced to substantially zero) due to noise or outliers present within the one or more signals received from the current transducers at or within the bus terminals 232, 234, 242, 244, 252, 254 and/or the device terminals 236, 238, 246, 248, 256, 257, 258.

Further description of performance of the method 300 by the respective controllers 297, 296, 295 with respect to the development of a fault within the electrical power system 200 at various locations is provided with reference to FIG. 3.

### Location 1

If a fault develops between one of the AC electrical machines 211 operating as an electrical source and its corresponding converter 205 (as represented by reference sign 1 within the dashed box in FIG. 3), the controller 295 of the relevant converter 205 causes the converter 205 to enter and be maintained in the blocked configuration (per step (a) at sub-block 322) within a timescale of an order of tenths of milliseconds. The converter 205 being in the blocked configuration substantially prevents the transfer of electrical power between the AC electrical machine 211 and the DC bus 210 and thus enables the bus side contactor 285 to be opened (per step (d) at sub-block 328) at substantially zero (e.g., zero or close to zero) load. In addition, transfer of electrical power from the DC bus 210 (e.g., and thus from any of the other electrical sources feeding the DC bus 210) into the fault between the AC electrical machine 211 and the corresponding converter 205 is substantially prevented. The DC bus 210 is then galvanically isolated from the part of the electrical system 200 containing the fault (i.e., the coupling between the AC electrical machine 211 and the converter 205). Other devices of the electrical power system 200 can then continue supplying/receiving electrical power to the DC bus 210 (after having being recoupled, if necessary) without risking being coupled to the part of the electrical system 200 containing the fault.

### Location 2

If a fault generally occurs on the DC bus 210 or on the coupling between one of the converters 207, 206, 205 and the DC bus 210 (i.e., within the DC distribution network as represented by reference sign 2 within the dashed box in FIG. 3), the controller 295 of the AC-DC converter 205 initially causes the converter 205 to enter and be maintained in the blocked configuration (per step (a) at sub-block 322) followed by causing the converter 205 to enter and be maintained in the crow-bar configuration (per step (b) at sub-block 324) to divert the fault current back to the AC electrical machine 211 via the low-impedance path between the device terminals 256, 257, 258 and therefore away from the contactor 285 and therefore allowing it to be opened (per step (d) at sub-block 328) at substantially zero (e.g., zero or close to zero) load.

The controller 297 of the first DC-DC converter 207 (i.e., the DC-DC converter coupled between the battery pack 203 and the DC bus 210) causes the converter 207 to enter and be maintained in the blocked configuration (per step (a) at sub-block 322) to isolate the DC power supply 226 from the DC distribution network in cooperation with the transformer 259. The controller 297 then causes the bus side contactor 287 to open (per step (d) at sub-block 328) at substantially zero (e.g., zero or close to zero) load.

### Location 3

If a fault develops between the third DC-DC converter 207 and the non-propulsive load 260, the controller 297 of the third DC-DC converter 207 (i.e., the DC-DC converter coupled between the non-propulsive load and the DC bus 210) causes the converter 207 to enter and be maintained in the blocked configuration (per step (a) at sub-block 322) to isolate the non-propulsive load 260 from the DC distribution network in cooperation with the transformer 259. The controller 297 then causes the bus side contactor 287 and/or the device side contactor 287' to open (per step (d) at sub-block 328) at substantially zero (e.g., zero or close to zero) load.

### Location 4

If a fault occurs proximal to the energy storage device (e.g., the battery pack 203 as represented by reference sign 4 within the dashed box in FIG. 3), the controller 297 of the first DC-DC converter 207 (i.e., the DC-DC converter coupled between the battery pack 203 and the DC bus 210) causes the converter 207 to enter and be maintained in the blocked configuration (per step (a) at sub-block 322) to isolate the battery pack 203 from the DC distribution network in cooperation with the transformer 259. The controller 297 then causes the bus side contactor 287 to open (per step (d) at sub-block 328) at substantially zero (e.g., zero or close to zero) load. The fuse 293 may function to limit a magnitude of the electrical current that can flow into the first DC-DC converter 207 from such an energy storage device after such a fault occurs.

### Location 5

If a fault generally occurs on the DC bus 210 or on the coupling between one of the converters 207, 206, 205 and the DC bus 210 (i.e., within the DC distribution network as represented by reference sign 5 within the dashed box in FIG. 3) while electrical power is being supplied to the DC bus 210 from the DC power supply 226, the second DC-DC converter 207 (i.e., the DC-DC converter coupled between the DC power supply 226 and the DC bus 210) the controller 297 of the second DC-DC converter 207 causes the converter 207 to enter and be maintained in the blocked configuration (per step (a) at sub-block 322) to isolate the DC power supply 226 from the DC distribution network in cooperation with the transformer 259. The controller 297 then causes the bus side contactor 287 to open (per step (d) at sub-block 328) at substantially zero (e.g., zero or close to zero) load.

Methods and systems in accordance with the present disclosure provide means for isolating electrical faults occurring in an electrical power system having a DC distribution network by opening a mechanical contactor at substantially zero load. This permits safe galvanic isolation of an electrical fault from the remainder of the electrical power system. In addition, opening of the mechanical contactor at substantially zero load can prevent arcing events from occurring, thereby extending an operational lifetime of the mechanical contactor and thus reducing a maintenance burden associated with the electrical power system. Such methods and systems utilise functionalities of semiconductor-based active power converters coupled to the DC distribution network to facilitate opening of the mechanical contactor in an improved (e.g., safer) manner. The functionalities may be obtained using off-the-shelf components for the semiconductor-based active power converters. Such methods and systems are therefore well suited for use within electrical power systems in which redundancy is present (e.g., one or more additional redundant DC distribution networks/channels are included within the electrical power system). Methods and systems in accordance with the present disclosure eliminate the need to use dedicated devices such as solid state switching devices (SSPCs) in multiple locations for electrical fault isolation, thereby facilitating the provision of lower-mass/lower-weight electrical power systems, which is of particular importance in the context of aircraft electrical power system. Method and system in accordance with the present disclosure are usable irrespective of the direction of power flow within an electrical power system, for example regardless of whether an aircraft in which the electrical power system is incorporated is operating in a typical state (e.g., generating electrical power from a gas turbine engine of the aircraft) or otherwise (e.g., providing electrical power to a gas turbine engine of the aircraft for cranking/motoring during a start-up process).

### Machine readable medium/data carrier

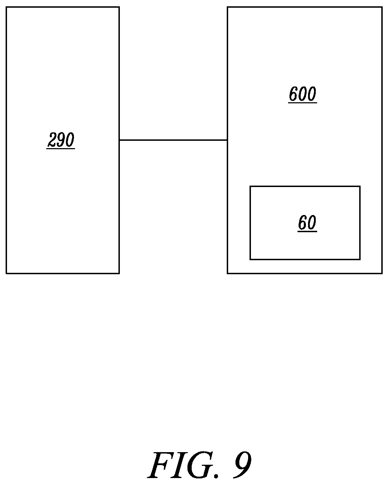

FIG. 9 shows, highly schematically, a machine-readable medium/data carrier 600 having stored thereon a computer program 60 comprising instructions which, when executed by a data processing apparatus 290 (e.g., the controller 297, 296, 295 of the semiconductor based active power converter 207, 206, 205 and/or a central controller of the electrical power system 200), cause the data processing apparatus 290 to execute a method 300 as described herein with reference to FIG. 8.

### Other

Various examples have been described, each of which comprise one or more combinations of features. It will be appreciated by those skilled in the art that, except where clearly mutually exclusive, any of the features may be employed separately or in combination with any other features and the invention extends to and includes all combinations and sub-combinations of one or more features described herein. The present disclosure is also relevant for land, aviation and marine applications in both civil and military contexts.

## Claims

1. A method of operating an electrical power system for an aircraft, the electrical power system comprising:
a semiconductor-based active power converter; and
a contactor coupled to and controllable by the semiconductor-based active power converter;
an electrical device and a DC bus; and wherein
the semiconductor-based active power converter is coupled between the DC bus and the electrical device via the contactor:
the method comprising:
in response to a determination that there is a fault within the electrical power system, operating in a fault mode which includes:
maintaining the semiconductor-based active power converter in a blocked configuration; and subsequently
causing the contactor to be opened.

2. The method of claim 1, wherein operating in the fault mode includes:
monitoring a magnitude of an electrical current through a conduction pathway which includes the contactor; and
causing the contactor to be opened when the monitored magnitude is lower than a threshold value.

3. The method of claim 1 or claim 2, wherein operating in the fault mode includes:
subsequent to maintaining the converter in the blocked configuration and prior to causing the contactor to be opened, maintaining the converter in a crow-bar configuration.

4. The method of any preceding claim, wherein:
the electrical device is an AC electrical machine; and
the semiconductor-based active power converter is coupled to the DC bus via the contactor.

5. The method of claim 4, wherein the AC electrical machine is a motor, a generator or a motor-generator.

6. The method of claim 1, wherein the electrical device includes an energy storage device.

7. The method of claim 6, wherein the electrical system further comprises a fuse coupled between the semiconductor-based active power converter and the energy storage device.

8. The method of any preceding claim, wherein;
the semiconductor-based active power converter is one of a plurality of semiconductor-based active power converters of the electrical power system;
the contactor is one of a plurality of contactors of the electrical power system, each contactor being coupled to and controllable by a respective one of the semiconductor-based active power converters; and
operating in the fault mode includes:
maintaining at least one of the semiconductor-based active power converters in the blocked configuration; and subsequently
causing the contactor coupled to the at least one semiconductor-based active power converter to be opened.

9. An electrical power system comprising:
a semiconductor-based active power converter;
a contactor coupled to and controllable by the semiconductor-based active power converter; and
a controller configured to carry out the method of any preceding claim.

10. The electrical power system of claim 9, wherein the semiconductor-based active power converter comprises the controller.

11. An aircraft comprising the electrical power system of claim 9 or claim 10.

12. A computer program comprising instructions to cause the controller of the electrical power system of claim 9 or claim 10 to carry out the method of any of claims 1 to 9.

13. A computer-readable medium having stored thereon the computer program of claim 12.
